# EUROPEAN PATENT APPLICATION

(11) **EP 1 801 615 A1**
(43) Date of publication of application: **27.06.2007**
(21) Application number: 06026772.1
(22) Date of filing: 22.12.2006
(51) Int. Cl.: G01T 1/164, H04N 5/32

(54) **Remote triggered x-ray image capture device**

(30) Priority: 22.12.2005 US 317462
(71) Applicant: Remote Acquisitions LLC, Portland, Oregon 97213 (US)
(72) Inventor: Campbell, William E., Marietta, Georgia 30064 (US)
(74) Representative: Hoarton, Lloyd Douglas Charles

(57) **Abstract**

Systems and methods are presented herein for generating an X-ray image wherein the X-ray image generator has no electrical connection with an X-ray source which generates the X-rays. The X-ray image generator comprises a screen which converts at least a portion of the X-rays generated by the source into light; a mirror which reflects the light such that a light-measuring device is focused on the screen, a photon detector which triggers the light measuring device when it detects photons related to the generated X-rays, and a computer connected to at least the light-measuring device which processes the output from the light-measuring device into an image displayable on a computer screen.

## Description

### BACKGROUND

X-ray images can be taken with film in traditional radiography, they can be digitally generated using imaging plates in a process called computed radiography, and digital images can be generated directly from the X-rays themselves in a process called direct digital radiography. Each of these systems has its drawbacks. When film is used to process X-rays, the film must be purchased for each X-ray, and the film must be developed in a process that takes somewhere around 90 seconds to 5 minutes per shot. A patient must wait for the entire developing time to determine if an image is clear or if a retake is needed. Furthermore, processing the films requires that noxious chemicals be used and stored, and disposed.

Computed radiography removes the film from the X-ray process, replacing it instead with a digital imaging plate the same dimensions as the film and placed in the same location. After the imaging plate is exposed to the X-rays, it is placed in an imaging reader, which takes about 90 seconds to generate the digital image. This delay, while not insurmountable when human adults are having their X-rays taken is much more problematic when the X-ray subject is a small child or an animal which does not understand the need to remain quiet and positioned. Furthermore, the imaging plate is expensive and fragile, an expensive imaging reader must also be used, and generating the digital X-ray image takes roughly the same time as in conventional radiography.

Direct digital radiography uses an imaging sensor in the path of the X-rays to take a direct digital X-ray, which can then immediately be displayed on a computer screen, and saved in a digital file for easy reference. However, it is difficult to adequately shield the imaging sensor from the X-rays requiring that this expensive piece of equipment be regularly replaced. Moreover, there must be an electrical connection between the imaging sensor and the X-ray generator, making retrofitting existing X-ray equipment difficult or impossible.

### SUMMARY

This summary is provided to introduce a selection of concepts in a simplified form that are further described below in the Detailed Description section. This summary is not intended to identify key features or essential features of the claimed subject matter, nor is it intended to be used as an aid in determining the scope of the claimed subject matter.

In an exemplary embodiment, a system for capturing X-ray images is described. It comprises a screen for converting X-ray photons to light photons when an X-ray source sends X-ray photons to the screen; a light-measuring device that records at least some of the light photons to produce an image; a photon detection device which triggers the light-measuring device when it detects photons over a threshold value. Furthermore, there is no electronic link between the circuitry of the X-ray source and the system for capturing X-ray images.

In another exemplary embodiment, a method of creating X-ray images is presented which comprises converting at least some X-ray photons generated from an X-ray source to light photons; and then, using a mirror to reflect light such that a camera placed outside of the direct path of the X-rays can take a picture of substantially all of the X-ray image. When a sensor detects photons in greater than a threshold amount, the light image sensor is triggered which, in turn, triggers the camera to take the picture of the X-ray image.

In a further exemplary embodiment, a system to display an X-ray image is presented. It comprises a screen that converts at least a portion of X-ray photons generated by an X-ray source into light photons; and a mirror that reflects the light path of a camera out of the direct path of the X-rays such that the camera is substantially focused on the screen which converts at least a portion of the X-ray photons into light photons. The camera converts at least a portion of the light photons to a digital X-ray image. Moreover, essentially all of the X-ray photons in the direct path of the camera are absorbed by a shield, and so do not strike the camera. The system also comprises a computer with a screen used to display a representation of the digital X-ray image.

Additional features and advantages will become apparent from the following detailed description of illustrated embodiments, which proceeds with reference to accompanying drawings.

### BRIEF DESCRIPTION OF THE FIGURES

FIG. 1A is an illustration of several aspects of a remote-triggered X-ray capture device including aspects of the enclosure unit in conjunction with which described embodiments may be implemented.
FIG. 1B is an illustration of several aspects of a remote-triggered X-ray capture device which builds on aspects shown in FIG. 1A in conjunction with which described embodiments may be implemented.
FIG. 2 is an illustration of several aspects of a remote-triggered X-ray image capture device which builds on aspects shown in FIG. 1 in conjunction with which described exemplary embodiments may be implemented.
FIG. 3 is an illustration of several aspects of a remote-triggered X-ray image capture device including light paths in conjunction with which described exemplary embodiments may be implemented.
FIG. 4 is a functional block diagram illustrating an embodiment of an example system for capturing X-ray images in conjunction with which described exemplary embodiments may be implemented.
FIG. 5 is an operational flow diagram illustrating a process for capturing X-ray images in conjunction with which described exemplary embodiments may be implemented. FIG. 6 is a block diagram of a suitable computing environment in conjunction with which described exemplary embodiments may be implemented.

### DETAILED DESCRIPTION

The present application relates to technologies for remote-triggered X-ray devices. Described embodiments implement one or more of the described technologies.

Various alternatives to the implementations described herein are possible. For example, embodiments described with reference to flowchart diagrams can be altered by changing the ordering of stages shown in the flowcharts, by repeating or omitting certain stages, etc. As another example, although some implementations are described with reference to specific devices, such as cameras and screens which transform X-rays into light; other devices with the same functionality also can be used.

The various technologies can be used in combination or independently. Different embodiments implement one or more of the described technologies. Some technologies described herein can be used in conjunction with a computer; such a computer could be a desktop computer, a portable computer, a handheld computer, a wearable computing device, a Personal Digital Assistant (PDA), or an intelligent cell phone.

### I. Overview

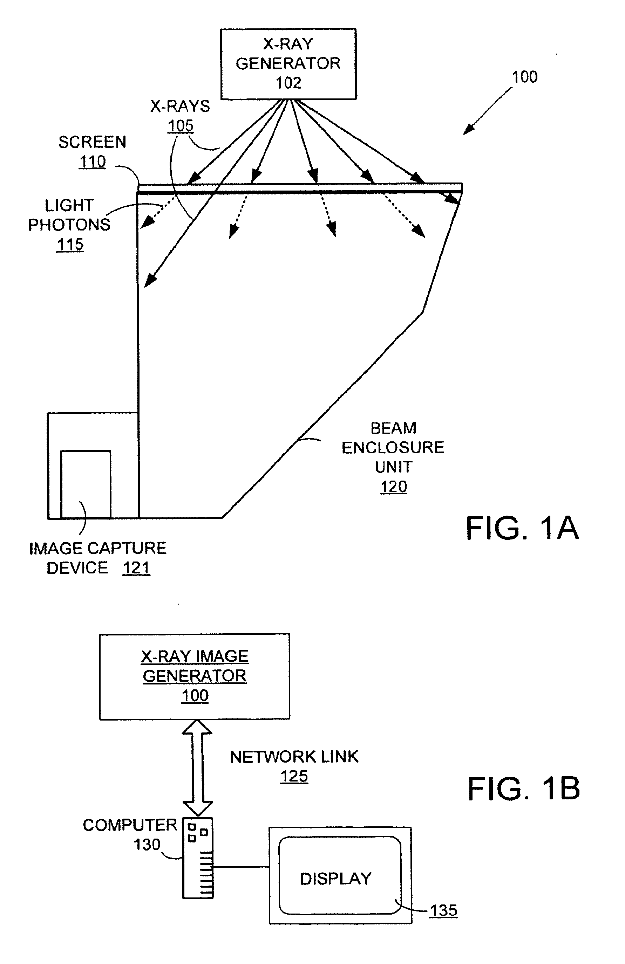

With reference to FIGs. 1A and 1B, systems and methods are presented herein for creating a remote-triggered X-ray device. The device is designed to be used with existing X-ray generators, as it does not require an electrical connection between the existing X-ray machine and the direct digital radiography recording device. When an X-ray generator 100 is activated, X-rays 105 are directed towards a screen 110. X-rays are electromagnetic radiation with a wavelength between 10 nanometers and 100 picometers. This corresponds to frequencies between 30 PHz and 3 EHz. X-ray wavelengths overlap those of Gamma rays; Gamma rays are generated by transitions within the atomic nucleus, while X-rays are generated by energetic electron processes. For the purposes of these embodiments, all radiation with wavelengths between 10 nanometers and 100 picometers, no matter what the source, should be considered X-rays.

The screen 110 transforms X-rays 105 into light 115, which may be fluorescent light. In some embodiments, the light may be in the visible, the infrared, or the ultraviolet spectrum, or some combination thereof. These screens, sometimes called intensifying screens, generally contain, among other ingredients, a layer of phosphor crystals. When an X-ray photon strikes a phosphor crystal, many light photons are emitted, which will then be photographed to create the X-ray image. Two major types of phosphors used to create intensifying screens for use with envisioned embodiments are calcium tungstate (CaWO₄) and various rare earths. Among the rare earths, Gadolinium Oxysulfide and Thallium-doped Cesium Iodide are among the substances suitable for building an intensifying screen. However, other substances that convert X-rays to light, such as metal screens, are also envisioned to be used.

The screen 110, 205 is mounted on the top of the beam enclosure unit 120. This beam enclosure unit 120, in an exemplary embodiment, is installed under a table top. A variety of mounting devices adapted to each type of table manufactured are expected to be used in the installation. When an embodiment is used in a veterinary setting, those mounting in common use in veterinary medicine are used. The beam enclosure unit 120 should be installed such that the system weight is supported and such that an X-ray beam is appropriately aligned during exposure. The support mechanism can allow freedom of motion when an X-ray support tower (not shown) is moved toward either end of the table that the beam enclosure unit 120 is installed underneath. In another embodiment, the beam enclosure unit 120 is installed without a table present.

The aperture of the beam enclosure unit 120 through which the X-rays 105 enter measures, in exemplary embodiments, either 14" x 14" or, 14" x 17". A light-tight cover is also included (not shown) which also may act as support for the screen 110. The screen 110 may be bonded to the light-tight cover. The light-tight cover may be made of carbon fiber to minimize X-ray absorption. The light-tight cover can be bolted around its perimeter to the beam enclosure 120 with tamper-proof screws.

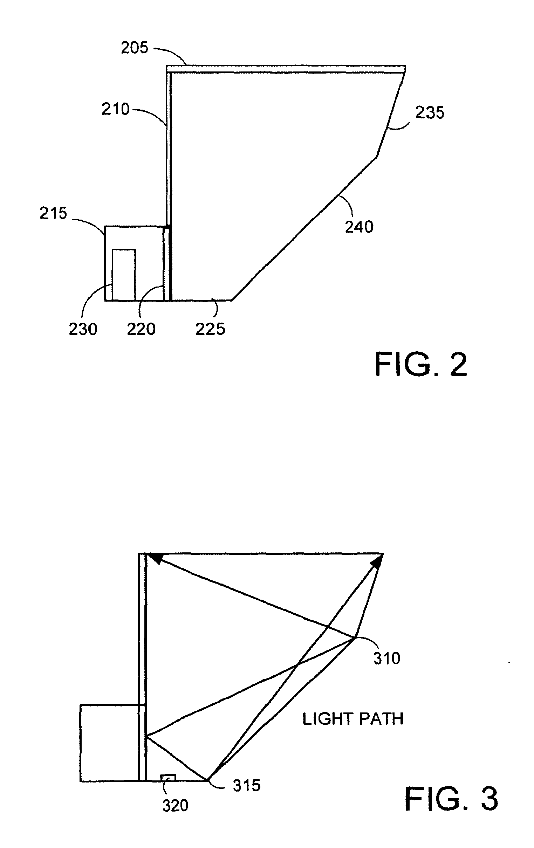

Turning to FIGs. 2 and 3, and with continuing reference to FIG. 1, the light 115 is captured by the accumulator 220, which, in an exemplary embodiment, is designed to minimize quantum efficiency loss and provide an optically flat field. A small amount of adjustment of the light rays entering the accumulator 220 may be provided by the accumulator 220.

A light measuring device such as a camera 230 is placed in an enclosure 215 just behind the accumulator 220. Shielding 210 protects the camera 230 from the X-rays 105. Because of the location of the shielding 210 in relation to the X-rays 105 in the beam enclosure unit 120, steel can be used for the shielding rather than the more common lead, as the camera 230 is out of the direct path of the X-rays. In another exemplary embodiment, lead is used for the shielding. Additional shielding may be placed along other areas where X-rays may penetrate 225, 235. The dangers of X-ray radiation on living tissue is well-known. X-rays are also destructive of sensitive equipment. For example X-ray exposure can greatly shorten the working life of a camera used to take an X-ray. Shielding the camera 230, as is done here, both by using traditional shielding 210, 225, 235, and by placing the camera 230out of the direct path of the X-rays, can lead to a much longer camera life, and can greatly reduce the amount of maintenance needed on the X-ray device.

A mirror 240 is also included as part of the beam enclosure 120, in an exemplary embodiment. An accumulator 220 is arranged in front of the camera 230. The mirror 240 reflects the light 115 seen by the camera 230 at an angle that focuses the light 115 across the length of the screen 110. In an exemplary embodiment, the reflected light path is shown at 310, 315. It can be seen that the entire aperture of the beam enclosure unit 120 through which the X-rays 105 enter can effectively be "seen" by the camera 230 through the image reflected in the mirror 240. Thus, when the camera 230 is triggered, the camera 230 captures substantially the entire X-ray image (as translated into light). The mirror 240, in an exemplary embodiment, is mounted at a 45-degree angle, though other angles of mounting are envisioned. Additionally, the mirror 240 may be enhanced by surface preparation to provide additional light reflection when mounted between 43 degrees and 47 degrees to the incident light beam. The mirror 240 may reflect in excess of 97.5 degrees of the available light, and may be aluminum-enhanced, and micro- or pico-ground.

In an exemplary embodiment, there is no connection between the X-ray source 100, shown in FIGs. 1A and 1B and the remote-triggered X-ray device. This allows the X-ray device to be easily retrofitted to existing X-ray sources, as there is no need for an electrical connection between the existing X-ray source and this device. Therefore, wiring diagrams need not be consulted, for example. This allows existing X-ray sources, whose wiring may have been lost, to still be retrofitted with minimum difficulty. In systems whose wiring is known, the expense and time of wiring the two devices together is eliminated. Further, an entire category of timing problems between the systems is also eliminated.

With reference to FIG. 3, A photon detector 320 is provided which triggers substantially at the exact moment that the visible light rays 115 are available to be captured by the camera 230. The location of the photon detector 320 in FIG. 3 is for illustrative purposes only; it can be placed anywhere within the beam enclosure unit 120 that is convenient. It may also be placed outside the beam enclosure unit 120 if by such placement it can still trigger the camera 230 at the time of X-ray generation without being integrated into the circuitry of the host X-ray source. When the camera 230 is triggered by the photon detector 320, it creates a digital image representative of the X-rays. As shown in FIG. 1B, this digital image can then be transferred through a link 125 to a computer 130, which then processes the image and displays it on a computer screen 135. In an exemplary embodiment, the system is used primarily in a veterinary setting.

### II. Exemplary System Embodiment

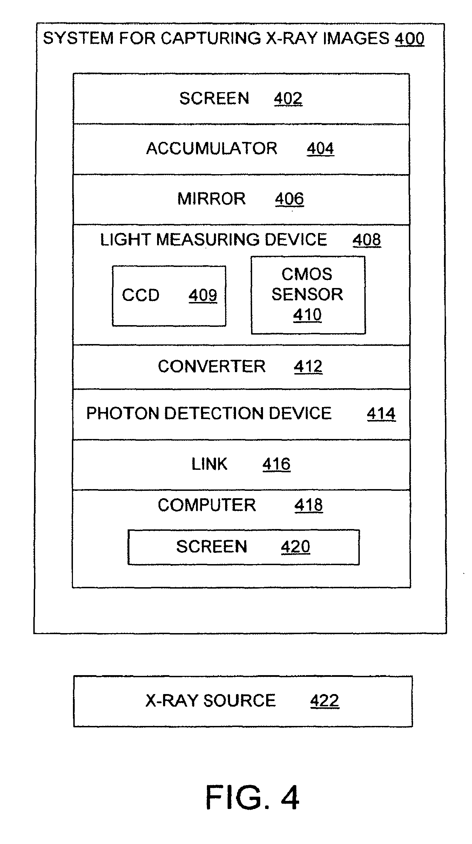

Referring to FIG. 4, a block diagram of a system for capturing X-ray images 400 shows an exemplary embodiment of the systems discussed herein.

The system for capturing X-ray images 400 consists of a screen 402, which converts X-ray photons to light photons. Generally, the screen contains a material, among other components, which, when struck by an X-ray photon, generates light photons. Inorganic salts, also known as phosphors, are among the materials that are suitable to generate light photons when struck by an X-ray photon. If an inorganic salt is used, it will generate florescent light. Only a portion of the X-rays will be absorbed by the screen, causing light photons to be emitted. For example, if calcium tungstate is used, approximately 20 to 40 percent of the X-ray photons will be absorbed; the bulk of the rest will pass through the screen into the beam enclosure unit 120. In comparison, rare earth screens absorb approximately 60 percent of the X-ray photons. Furthermore, the efficiency of calcium tungstate screens at converting X-rays into light is only about one-third to one-fourth that of rare earth screens. However, each materials may be used in exemplary embodiments.

The system also contains a mirror 406. The light rays generated by the screen 402, continue on the same path as that of the initial X-rays that generated the light. The mirror 406 reflects the light rays that strike it at such an angle that the light-measuring device 408 is focused on the screen 402 such that when the light-measuring device 408 is triggered, a view of substantially the entire screen is captured. As shown, the image path from the light measuring device 408 is folded, such that the light rays strike the mirror 406 and are bent such that at least some of the light rays cross paths on their way to the screen. The illustrated embodiment shows the rays bending once; other embodiments can employ image paths that bend the rays multiple times. In an exemplary embodiment, the mirror 406 is placed at a 45 degree angle to the screen 402. In alternate embodiments, the mirror is positioned such that a portion of the screen 402 is captured. Optionally, an accumulator 404 is used to at least partially focus the light on the light-measuring device 408. This light-measuring device 408, in an exemplary embodiment, is a charge-coupled device 409. In an alternate embodiment, a complementary metal oxide semiconductor (CMOS) device 410 is used as the light-measuring device 408. An exemplary embodiment employs more than one light-measuring device.

When the light-measuring device 408 is triggered, each pixel that makes up a light-measuring array in either the charge-coupled device 409 or the CMOS device 410 is struck by some number of light photons, which are then converted to electrons. The number of electrons in each pixel is considered the pixel's charge. A converter 412 then converts the charge into a digital value. Each of the digital values is then associated with a specific gray-scale value, in an exemplary embodiment to form a detailed black and white image.

In another embodiment, the light-measuring device 408 records the images in color, with each digital value is associated with a color, using some color space to assign specific values to the pixels. Examples of exemplary color spaces known to those in the art that could be used in exemplary embodiments are RGB, CNY, CMYK, HSV, HLS, and so on.

In an exemplary embodiment, a large-format charge-coupled device has an 11 megapixel grid, which provides up to 16 bits of grey depth in each pixel, resulting in over 65,000 shades of gray being converted into the eventual image. In another exemplary embodiment, a 4 megapixel grid is used, which provides two line pairs per millimeter resolution on the final image.

As there is no direct electrical connection between the system for capturing X-ray images 400 and the source of the X-rays 422, the system itself must determine when to trigger the light-measuring device 408. It does this using a photon detection device 414, which, when it registers either X-rays or light, sends an activation message to the light-measuring device 408 telling it to "snap the picture." Some embodiments may only trigger the light-measuring device 408 when a number of photons over a background threshold amount are detected. If X-rays are detected, an exemplary embodiment uses an ionization chamber as the photon detection device 414. In some embodiments, a gamma ray detector is used for the photon-detector device.

The digital image in the converter 412, which represents an X-ray of a subject, is transferred to a computer 418 using a link 416. This link may be a network connection. If so, it may be a wireless network connection. Once the computer 418 has the image, it processes it to make it clear and readable on a computer screen, and then displays it on a computer screen 420.

### III. Exemplary Method for Creating X-ray Images

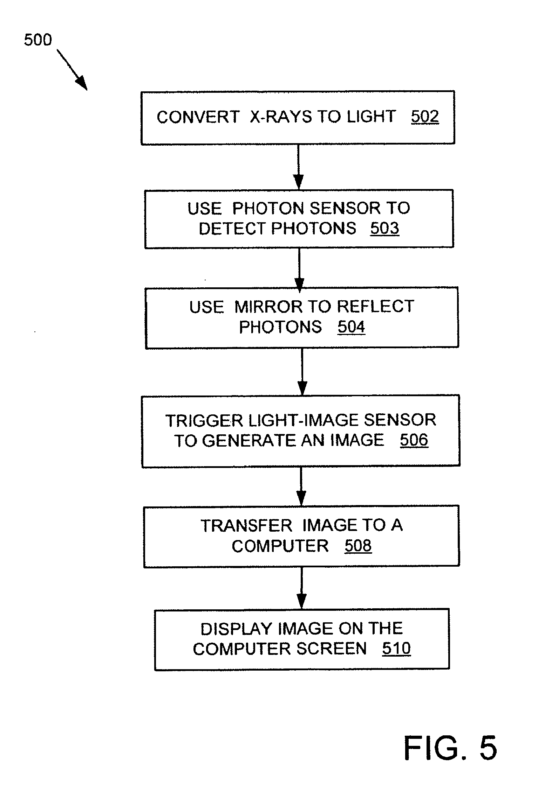

FIG. 5 is an operational flow diagram illustrating a process for creating X-ray images 500. The process begins at process block 502, where X-rays are converted into light. When an X-ray photon hits a phosphor crystal, the phosphor crystal absorbs the X-ray and emits a number of light photons. The size of the phosphor layer and the size of the individual phosphor crystals are some of the factors that determine the level of detail in the eventual X-ray image. The larger the individual crystal and the thicker the phosphor layer, the more spread-out the individual light photons are that are generated by the crystal. The image detail is degraded by the size of the light spread, as the same amount of information is smeared over a larger area. These considerations can be taken into account when determining the optimal material for a given screen.

The process continues at process block 503, where a photon sensor is used to detect whether X-rays or light rays are present. At process block 504 a mirror is used to reflect the light used by a light-measuring device such that essentially all of the light converted by X-rays can be "seen" by the light-measuring device, even if the light-measuring device is out of the direct path of the X-rays.

The process 500 is independent from an X-ray source process which creates the X-rays, so a method internal to process 500 must be used to determine when an X-ray machine has taken an X-ray. When X-rays or light rays are detected, at process block 506, a light-image sensor is triggered which generates an image corresponding to the X-ray. As has previously been detailed, this light image sensor may be a charge-coupled device, a CMOS device, or another device suitable for translating light energy into digital output.

At process block 508, the image is transferred to a computer. The transfer may take place through a network connection. The network may be local or wide-area network.. Furthermore, the network may be wired or the image may travel using a wireless network. In exemplary embodiments, the image is sent through a wireless connection to a communication device, such as a laptop or a portable communication device such as a PDA or an internet-enabled cell phone.

At process block 510, the image, after it has been processed by the computer, is displayed on a computer screen. The processing comprises turning the digital representation into an image that can be viewed on a screen, and may comprise certain modifications to the image, as are known to those of skill in the art. For example, if the image was initially exposed for too long and is too dark, an algorithm may be employed which "lightens" the image, making it easier to read. In some embodiments, an algorithm may be employed on some images to sharpen specific areas, increasing contrast over what would otherwise be seen. A variety of other visualization techniques may be used as well, such as thick-slab rendering, shaded volume rendering, shaded surface display, multi-planar reformatting, flexible clipping, maximum intensity projection, perspective viewing, and the like.

Processing may be provided which allows the image to be transferred to a different system, or which stores the image in a standard format, such as DICOM, CMP, PNG, JPEG, TIFF, GIF, or other widely-available format. Some embodiments may include algorithms which store the images in a proprietary format, the proprietary format being a format used by a single vendor or a limited number of vendors. Other processing as known to those of skill in the art, is also envisioned

### V. Computing Environment

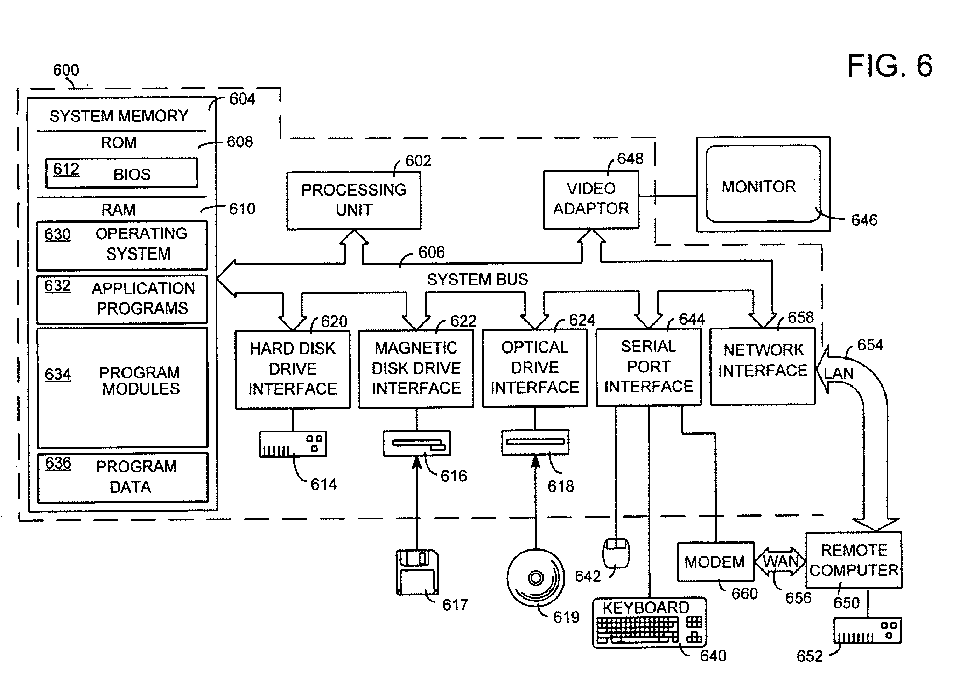

With reference to FIG. 6, an exemplary system for implementing at least portions of the disclosed technology includes a general purpose computing device in the form of a conventional computer 600, which may be a PC, or a larger system, including a processing unit 602, a system memory 604, and a system bus 606 that couples various system components including the system memory 604 to the processing unit 602. The system bus 606 may be any of several types of bus structures, including a memory bus or memory controller, a peripheral bus, and a local bus using any of a variety of bus architectures. The system memory 604 includes read only memory (ROM) 608 and random access memory (RAM) 610. A basic input/output system (BIOS) 612, containing the basic routines that help with the transfer of information between elements within the computer 600, is stored in ROM 608.

The computer 600 further includes one or more of a hard disk drive 614 for reading from and writing to a hard disk (not shown), a magnetic disk drive 616 for reading from or writing to a removable magnetic disk 617, and an optical disk drive 618 for reading from or writing to a removable optical disk 619 (such as a CD-ROM or other optical media). Flash memory (not shown) may also be used to store information. These disks 614, 616, 617, 618, and 619, the hard drive and the flash memory may be used separately or in combination to store digital X-ray images. Furthermore a cataloging system may also be included to allow easy retrieval of a desired image.

The hard disk drive 614, magnetic disk drive 616, and optical disk drive 618 (if included) are connected to the system bus 606 by a hard disk drive interface 620, a magnetic disk drive interface 622, and an optical drive interface 624, respectively. The drives and their associated computer-readable media provide nonvolatile storage of computer-readable instructions, data structures, program modules, and other data for the computer 600. They may also be used to store algorithms used to process, store, and retrieve the digital images, as well as other algorithms used in conjunction with the digital X-ray images. Other types of computer-readable media which can store data that is accessible by a computer, such as magnetic cassettes, flash memory cards, digital video disks, CDs, DVDs, RAMs, ROMs, and the like (none of which are shown), may also be used in the exemplary operating environment.

A number of program modules may be stored on the hard disk 614, magnetic disk 617, optical disk 619, ROM 608, or RAM 610, including an operating system 630, one or more application programs 632, including applications to manipulate, store, transfer, etc. the digital X-ray images, other program modules 634, and program data 636. A user may enter commands and information into the computer 600 through input devices, such as a keyboard 640 and pointing device 642 (such as a mouse). Other input devices (not shown) may include a digital camera, microphone, joystick, game pad, satellite dish, scanner, or the like (also not shown). These and other input devices are often connected to the processing unit 602 through a serial port interface 644 that is coupled to the system bus 606, but may be connected by other interfaces, such as a parallel port, game port, or universal serial bus (USB) (none of which are shown). A monitor 646 or other type of display device is also connected to the system bus 606 via an interface, such as a video adapter 648. This monitor 646 may be used to display the digital X-ray images. Other peripheral output devices, such as speakers and printers (not shown), may be included.

The computer 600 may operate in a networked environment using logical connections to one or more remote computers 650, and to a remote-triggered X-ray imaging system as shown, for example, in FIG. 1. The remote computer 650 may be another computer, a server, a router, a network PC, or a peer device or other common network node, and typically includes many or all of the elements described above relative to the computer 600, although only a memory storage device 652 has been illustrated in FIG. 6. The logical connections depicted in FIG. 6 include a local area network (LAN) 654 and a wide area network (WAN) 656. Such networking environments are commonplace in offices, enterprise-wide computer networks, intranets, and the Internet.

When used in a LAN networking environment, the computer 600 is connected to the LAN 654 through a network interface 658. When used in a WAN networking environment, the computer 600 typically includes a modem 660 or other means for establishing communications over the WAN 656, such as the Internet. The modem 660, which may be internal or external, is connected to the system bus 606 via the serial port interface 644. In a networked environment, program modules depicted relative to the computer 600, or portions thereof, may be stored in the remote memory storage device 652. Digital X-ray images may also be stored in the remote memory storage device 652. The network connections shown are exemplary, and other means of establishing a communications link between the computers may be used.

### VII. Alternatives

Having described and illustrated the principles of our various embodiments with reference to the illustrated embodiments, it will be recognized that the illustrated embodiments can be modified in arrangement and detail without departing from such principles.

Examples of object sizes, relative ratios between parts, angles shown, etc. are examples only and can be modified appropriately. Also, the technologies from any example can be combined with the technologies described in any one or more of the other examples.

In view of the many possible embodiments, it should be recognized that the illustrated embodiments are examples only and should not be taken as a limitation on scope. For instance, various components of systems and methods described herein may be combined in function and use. We therefore claim as our invention all subject matter that comes within the scope and spirit of these claims.

## Claims

1. A system for capturing X-ray images comprising:
a screen for converting X-ray photons to light photons when an X-ray source sends X-ray photons through the screen;
a light-measuring device which records at least some of the light photons to produce an image; and
a photon detection device which, when it detects photons over a threshold value, triggers the light-measuring device;
wherein there is no electronic link between circuitry of the X-ray source and the system for capturing X-ray images.

2. The system of claim 1 further comprising a converter which converts the image recorded by the light measuring device into a digital image.

3. The system of claim 2 further comprising a link from the converter to a computer, the link transferring the digital image to the computer.

4. The system of claim 3 wherein the computer further comprises a screen, and wherein a representation of the digital image is displayed on the screen.

5. The system of claim 1 wherein the light measuring device is one of a charge coupled device or a CMOS sensor.

6. The system of claim 1 further comprising a mirror, which reflects the light path of the light measuring device such that the light measuring device captures light from substantially all of the light photons when the light-measuring device is triggered.

7. The system of claim 1 wherein the light-measuring device is out of a path of substantially all of the X-rays.

8. The system of claim 1 further comprising shielding; the shielding at substantially a 90 degree angle from the screen.

9. The system of claim 1 wherein the screen comprises one of calcium tungstate or a rare earth.

10. The system of claim 1 wherein the photon detection device is one of a light-detecting device, an X-ray detecting device or a gamma ray detecting device.

11. The system of claim 1 wherein the system for capturing X-ray images is used in a veterinary environment.

12. The system of claim 1 wherein there are at least two light-measuring devices.

13. A method of generating an X-ray image, comprising:
converting at least some X-ray photons generated from an X-ray source to light photons;
triggering a light image sensor when the light image sensor detects photons in an amount greater than a threshold amount, and
using a mirror to reflect the light path from the light image sensor such that when the light image sensor is triggered, substantially all of the light representative of the X-ray image is captured, the light image sensor being out of the direct path of the X-ray photons; thereby generating an X-ray image.

14. The method of claim 13 wherein the photons detected by the sensor are light photons or X-ray photons.

15. The method of claim 13 whereby the X-ray image generated is a digital image.

16. The method of claim 15 further comprising using a network to transfer the digital image to a computer.

17. The method of claim 15 wherein the network is wireless.

18. The method of claim 15 wherein the computer is a portable communications device.

19. A system to display an X-ray image comprising:
a screen to convert at least a portion of X-ray photons generated by an X-ray source into light photons;
a mirror to reflect the light path from a camera to focus the camera on substantially all of the screen;
wherein the camera converts at least a portion of the light photons to a digital X-ray image, wherein the camera is out of the direct path of a portion of the X-ray photons; and
a computer with a screen which displays the X-ray image.

20. The system of claim 19 wherein essentially all of the X-ray photons in the direct path of the camera are absorbed by a shield.

21. The system of claim 19 wherein the image is stored on the computer in at least one of the following formats: DICOM, CMP, PNG, JPEG, TIFF, GIF, or a proprietary format.
